# EUROPEAN PATENT APPLICATION

(11) **EP 1 403 950 A2**
(43) Date of publication of application: **31.03.2004**
(21) Application number: 03254999.0
(22) Date of filing: 12.08.2003
(51) Int. Cl.: H01M 8/02, H01M 8/10

(54) **MEMS-based fuel cell and methods**

(30) Priority: 14.08.2002 US 219507; 10.10.2002 US 269771
(71) Applicant: Hewlett-Packard Development Company, L.P., Houston, TX 77070 (US)
(72) Inventor: Mardilovich, Peter, Corvallis, OR 97330 (US); Herman, Gregory S., Albany, OR 97321 (US); Champion, David, Lebanon, OR 97355 (US); O'Neil, James, Corvallis, OR 97330 (US)
(74) Representative: Jackson, Richard Eric

(57) **Abstract**

A fuel cell **(10)** has a MEMS fuel-cell structure **(80)** including an anode **(20)**, a cathode **(30)**, and an electrolyte **(40),** formed on a substrate **(50)**, a portion of the substrate being removed from beneath the MEMS structure, forming an opening **(60)** extending upward from the bottom surface of the substrate to leave the MEMS structure **(80)** suspended in membrane form. An opening **(65)** may extend through the substrate to leave the MEMS fuel-cell structure in a cantilevered configuration **(110),** supported by only one edge **(120).** Additional openings **(150, 160, 170, 180)** may be formed to relieve mechanical stress near an edge or edges supporting the MEMS fuel-cell structure, and/or to limit heat-conducting paths. Specially adapted methods **(S10 - S70**) are disclosed for fabricating the MEMS-based fuel cell in any of its various configurations.

## Description

### CROSS-REFERENCE TO RELATED APPLICATION

This application is a continuation-in-part of co-pending and commonly assigned application serial number 10/219,507, filed August 14, 2002, the entire disclosure of which is incorporated herein by reference.

### TECHNICAL FIELD

This invention relates to fuel cells and more particularly to MEMS-based fuel-cell structures and related methods.

### BACKGROUND

Various portable devices, such as laptop computers, personal digital assistants (PDA's), portable digital and video cameras, portable music players, portable electronic games, and cellular phones or other wireless devices, require portable power sources. The weight and inconveniences of single-use batteries and rechargeable batteries have motivated efforts to replace those power sources for portable use. Thus, there is an increasing demand for light-weight, re-usable, efficient, and reliable power sources in such applications and in many other applications as well. In attempts to meet these needs, various portable fuel cells have been developed, such as ceramic-based solid-oxide fuel cells, direct methanol fuel-cell (DMFC) systems, reformed-methanol-to-hydrogen fuel-cell (RMHFC) systems, and other proton-exchange-membrane (PEM) fuel-cell systems. Microscale design principles have been applied to the design of portable fuel cells to provide improved power density and efficiency and to provide lower cost. There is a continuing need and a large anticipated market for improved practical compact portable fuel cells with rapid startup times and improved efficiency. There is a particular need for compact portable fuel cells with improved thermal isolation of their active portions and with reduced thermally-induced mechanical stress.

### BRIEF DESCRIPTION OF THE DRAWINGS

The features and advantages of the disclosure will readily be appreciated by persons skilled in the art from the following detailed description when read in conjunction with the drawings, wherein:
FIG. 1A is a top plan view and FIG. 1B is a side elevation cross-sectional view illustrating a stage in fabrication of a first embodiment of a fuel cell made in accordance with the invention.
FIG. 2A is a top plan view and FIG. 2B is a side elevation cross-sectional view illustrating another stage in fabrication of a first embodiment of a fuel cell made in accordance with the invention.
FIG. 3A is a top plan view and FIG. 3B is a side elevation cross-sectional view illustrating another stage in fabrication of a first embodiment of a fuel cell made in accordance with the invention.
FIG. 4A is a top plan view and FIG. 4B is a side elevation cross-sectional view illustrating another stage in fabrication of a first embodiment of a fuel cell made in accordance with the invention.
FIG. 5 is a flow chart illustrating an embodiment of a method for fabricating a fuel cell in accordance with the invention.
FIG. 6 is a side elevation cross-sectional view illustrating a second embodiment of a fuel cell made in accordance with the invention.
FIG. 7A is a top plan view and FIG. 7B is a side elevation cross-sectional view illustrating a third embodiment of a fuel cell made in accordance with the invention.
FIG. 8 is a side elevation cross-sectional view illustrating a fourth embodiment of a fuel cell made in accordance with the invention.
FIG. 9 is a side elevation cross-sectional view illustrating a fifth embodiment of a fuel cell made in accordance with the invention.
FIGS. 10A - 10C are top plan views illustrating various stages in fabrication of a sixth embodiment of a fuel cell made in accordance with the invention.
FIGS. 11A - 11C are top plan views illustrating various stages in fabrication of a seventh embodiment of a fuel cell made in accordance with the invention.
FIGS. 12A - 12C are top plan views illustrating various stages in fabrication of a eighth embodiment of a fuel cell made in accordance with the invention.
FIG. 13 is a side elevation view schematically illustrating various positional configurations taken by a fuel cell structure in response to temperature changes.
FIG. 14 is a perspective view schematically illustrating various positional configurations taken in response to temperature changes by fuel cell structures in an array of fuel cells made in accordance with the invention.

### DETAILED DESCRIPTION OF EMBODIMENTS

Throughout this specification and the appended claims, the term "fuel cell" means a fuel cell in its usual meaning or a battery cell having an anode, a cathode, and an electrolyte. The term "MEMS" has its conventional meaning of a micro-electro-mechanical system.

For clarity of the description, the drawings are not drawn to a uniform scale. In particular, vertical and horizontal scales may differ from each other and may vary from one drawing to another.

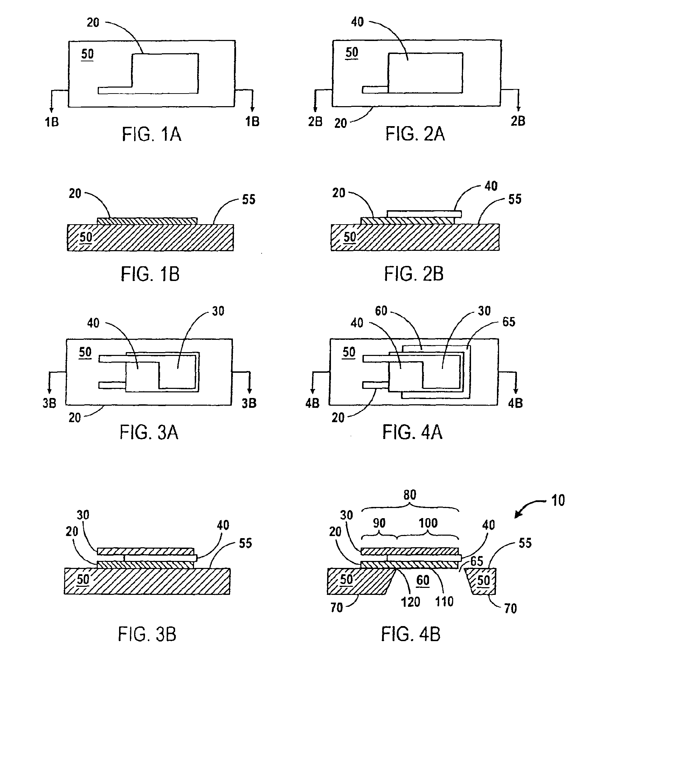

One aspect of the invention is a MEMS-based fuel cell **10**, as shown in the embodiments of FIGS. 4A, 4B, 6, 7A, 7B, 8, and 9, in which MEMS techniques are used to make an anode **20**, a cathode **30**, and an electrolyte **40** in contact with the anode and cathode. The fuel cell may be made based on a substrate **50** having an opening **60** extending upward from its bottom surface **70** and having a MEMS structure **80** with a portion **90** on the top surface **55** of the substrate and another portion **100** that extends over only part of opening **60**. Portion **90** of the MEMS structure has mechanical and thermal contact with substrate **50**.

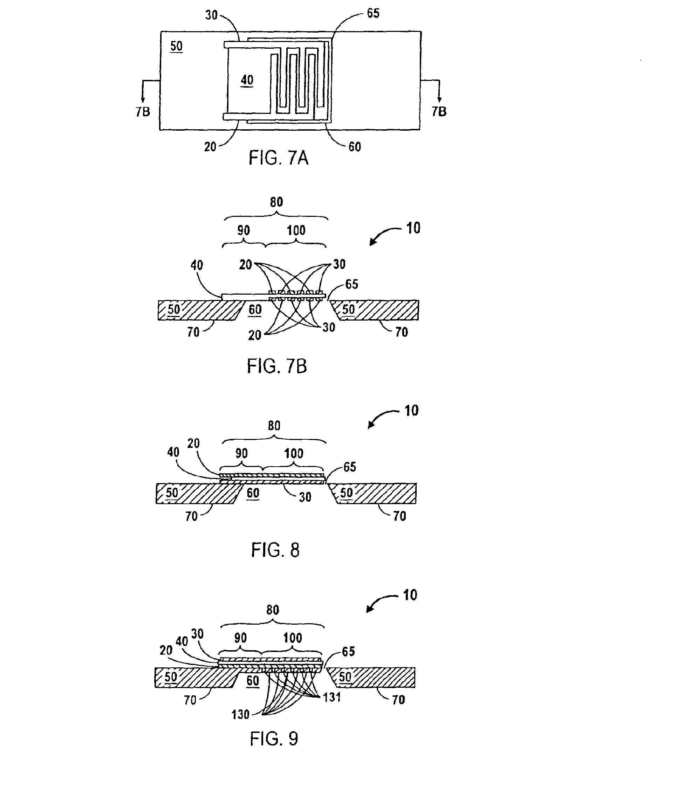

A portion **65** of the opening extends through the substrate. Thus, the portion **100** of the MEMS structure that extends over part of the opening forms a cantilever **110,** supported along only one edge **120**. In some embodiments, cantilever **110** is supported by the portion **90** of the MEMS structure on the top surface **55** of the substrate **50**. A salient portion **130** of substrate **50** may form part of cantilever **110**, as shown in FIG. 9.

While a fuel supply and means for removing excess products of the fuel-cell reaction are needed, conventional fuel supply and excess-product removal may be used with fuel cells made in accordance with the invention and therefore will not be described further herein.

By way of illustration, various embodiments of a MEMS-based fuel cell **10** made in accordance with the invention are described below, beginning with a first embodiment in which the bottom part of cantilever **110** is formed by a layer that serves as anode **20**, which extends outward from the top surface **55** of substrate **50** and over part of opening **60**. In this first embodiment, electrolyte **40** forms the middle layer of the MEMS structure, and cathode **30** forms the top layer, as shown in FIGS 3A, 3B, 4A, and 4B. Thus, anode **20** supports the electrolyte and cathode. In this and other embodiments, at least one element selected from among anode **20**, cathode **30**, and electrolyte **40** extends over both portions **90** and **100** of MEMS structure **80**. Thus, in such embodiments, at least one of the three elements, anode, electrolyte, or cathode (not necessarily the lowest layer), supports the remaining elements. Thus, MEMS structure **80** may comprise a cathode layer supported by an electrolyte layer, the electrolyte layer being supported in turn by an anode layer (FIG. 4B). Or MEMS structure **80** may comprise an anode layer supported by an electrolyte layer, the electrolyte layer being supported in turn by a cathode layer (FIG. 8).

Alternatively, as described below for another embodiment, a salient portion **130** of substrate **50** may support the anode, electrolyte, and cathode. Several of the embodiments of MEMS structure **80** described and illustrated herein comprise stacks of layers. The layers stacked, including the three elements, anode, electrolyte, and cathode, may be thin films.

FIGS. 1A, 1B, 2A, 2B, 3A, 3B, 4A, and 4B illustrate various stages in fabrication of a first embodiment of a fuel cell made in accordance with the invention.

FIGS. 1A, 2A, 3A, and 4A are top plan views, and FIGS. 1B, 2B, 3B, and 4B are side elevation cross-sectional views.

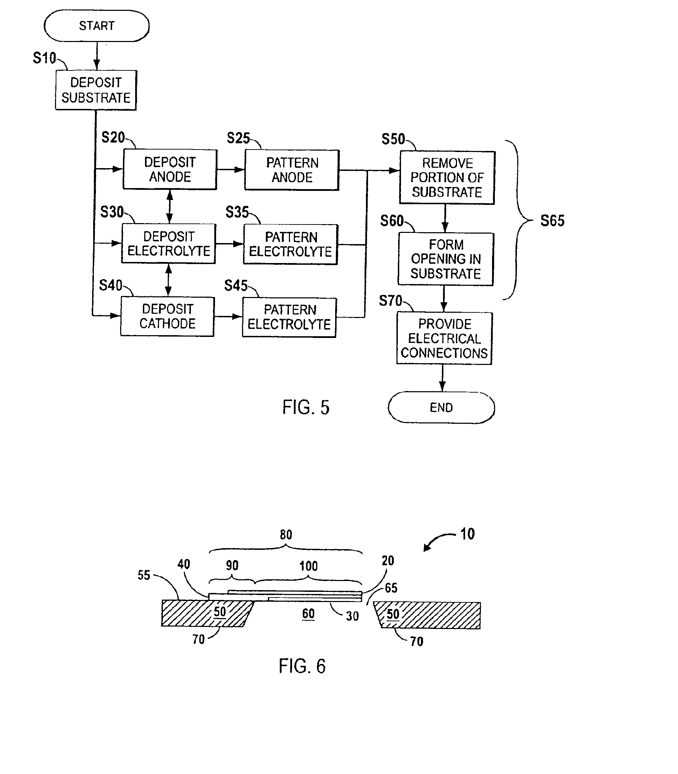

FIG. 5 is a flow chart illustrating an embodiment of a method for fabricating a fuel cell in accordance with the invention. In FIG. 5, various steps of the fabrication method are denoted by reference numerals **S10**, **S20**, ..., **S70**. For clarity, this description omits conventional steps known in the art and used for deposition and patterning of current collectors and of buffer layers (if required) between electrodes and electrolyte, or for application of barrier layers to protect portions of the structure when etching various components such as the anode cathode, electrolyte, and substrate.

In an overall fabrication method as shown of FIG. 5, a substrate **50** is provided (step **S10**), a portion of which will be removed later, as described below. Substrate **50** is an etchable material suitably stable at a desired temperature of operation. Depending on the operation temperature range, the substrate material may be a semiconductor (e.g., silicon), a metal (e.g., stainless steel), an oxide (e.g., titanium dioxide), a ceramic (e.g., alumina), a plastic or solid polymer (e.g., polytetrafluoroethylene). Substrate **50** may be a silicon wafer, for example, as used in conventional semiconductor integrated circuit fabrication. Three fuel-cell components (anode **20**, cathode **30**, and electrolyte **40**) are deposited in steps **S20**, **S40**, and **S30** respectively. If necessary, the anode **20** is patterned (step **S25**). Similarly, the cathode **30** and/or electrolyte **40** may be patterned (steps **S45** and **S35** respectively).

The order of depositing these three components (i.e., the sequence of performing steps **S20**, **S30**, and **S40**) may be varied for fabricating various embodiments of the fuel-cell structure. For fabricating the first embodiment illustrated in FIG. 4B, anode **20** is deposited on substrate **50** first (step **S20**) and patterned (step **S25**, FIGS. 1A and 1B), then electrolyte **40** is deposited on anode **20** (step **S30**) and patterned (step **S35**) as shown in FIGS. 2A and 2B, and then cathode **30** is deposited on electrolyte **40** (step **S40**) and patterned (step **S45**, FIGS. 4A and 4B). If one or more of the fuel-cell elements, e.g., electrolyte **40**, is deposited through a mask, a separate patterning step, e.g., step **S35**, is not needed.

A portion of substrate **50** under the three fuel-cell components is removed (step **S50**) to leave a portion **100** of MEMS structure **80** supported in membrane form. An opening **60** is also formed in substrate **50** (step **S60**) in at least partial alignment with MEMS structure **80**. Steps **S50** and **S60** can be performed simultaneously or combined into one step (**S65**). Those skilled in the art will recognize that any known conventional method may be used to align features on one side of substrate **50** with features on the other side, e.g., reflective alignment optics or infrared alignment through an infrared-transparent substrate.

As opening **60** is formed, a portion **65** of opening **60** may be extended though substrate **50**, to leave a portion **100** of MEMS structure **80** supported in cantilever form. In steps **S50** and **S60** or the combined step **S65**, a salient portion **130** of substrate **50** may be left to provide additional mechanical support. See FIG. 9, described below.

Electrical connections (not shown) are made (step **S70**) at least to anode **20** and cathode **30**. Step **S70** may be performed by depositing separate terminal electrodes in electrical contact with anode **20** and with cathode **30**. These may be conventional conductive terminal pads as used in semiconductor integrated circuits, for example. If fuel-cell structures are arranged in a stack of layers, the electrical connections may include vias connecting with fuel-cell structures on various layers of the stack.

As shown in FIGS. 6, 7A, and 7B, embodiments may be made in which the fuel-cell element extending over both of the portions **90** and **100** of MEMS structure **80** is the electrolyte **40**. For such embodiments, electrolyte **40** is any suitable solid electrolyte. Examples of suitable solid-electrolyte materials are cubic fluorites such as Sm- or Gd-doped CeO₂ and yttria-stabilized zirconia (YSZ, e.g., 8 mole% yttria), doped perovskite oxides such as La_{0.9}Sr_{0.1}Ga_{0.8}Mg_{0.2}O₃, proton-conducting perovskites such as BaZrO_{3,} SrCeO_{3,} and BaCeO_{3,} other proton-exchange ceramics, or ion- conductive polymers such as a perfluorosulfonic acid resin membrane (e.g., Nafion™ , available from DuPont Chemicals, Inc., Wilmington, DE). FIG. 6 shows a second embodiment and FIGS. 7A and 7B show a third embodiment.

In the third embodiment, illustrated in FIGS. 7A and 7B, electrolyte **40**, while supporting anode **20** and cathode **30**, is the middle layer of MEMS structure **80**. Thus, both cathode **30** and anode **20** are supported by a solid electrolyte layer. Also, in this embodiment, anode **20** and cathode **30** are suitably patterned to provide interleaved electrodes, spaced apart from each other. Both anode and cathode are patterned thin films in contact with the same side of the solid electrolyte layer, but spaced apart from each other. Such interleaving of electrodes may also be employed in other embodiments.

Thus, the fuel cell structure may be made with a cathode and/or an anode that is a patterned thin film in contact with a solid electrolyte layer. Each of the anode and cathode may be a thin film in contact with opposite sides of the electrolyte or in contact with the same side of the electrolyte.

FIG. 8, a side elevation cross-sectional view, shows a fourth embodiment, in which the fuel-cell element extending over both of the portions **90** and **100** of MEMS structure **80** is the cathode **30**.

FIG. 9 is a side elevation cross-sectional view illustrating a fifth embodiment of fuel cell **10**. As shown in FIG. 9, a salient portion **130** of substrate **50** supports the anode **20**, cathode **30**, and electrolyte **40** of fuel cell **10**. Salient portion **130** is patterned and etched to provide openings **131** extending through portion **130** to allow passage of fuel and/or an oxidant such as air. Openings **131** may be formed simultaneously with opening **65**. If substrate **130** is sufficiently porous without them, then of course openings **131** are not needed.

As pointed out above, the sequence of steps may be varied depending on the application and on the details of the desired fuel-cell structure. Thus, the fuel-cell structure may be formed by depositing an electrolyte upon the substrate, depositing and patterning an anode upon at least the electrolyte, (optionally) depositing an electrolyte over the anode, and depositing and patterning a cathode on at least the electrolyte, the cathode being spaced from the anode. Alternatively, the fuel-cell structure may be formed by depositing an electrolyte upon the substrate, depositing and patterning a cathode upon at least the electrolyte, (optionally) depositing an electrolyte over the cathode, and depositing and patterning an anode upon at least the electrolyte, the anode again being spaced from the cathode. In another alternative sequence, the fuel-cell structure may be formed by depositing and patterning an anode upon the substrate, depositing an electrolyte upon at least the anode, depositing and patterning a cathode upon at least the electrolyte, with the cathode again being spaced from the anode. In yet another alternative sequence, the fuel-cell structure may be formed by depositing and patterning a cathode upon the substrate, depositing an electrolyte upon at least the cathode, depositing and patterning an anode upon at least the electrolyte, again with the anode being spaced from the cathode. When the anode and cathode are to be interleaved on both sides of the electrolyte, as shown in FIGS. 7A and 7B, multiple depositions and/or patterning steps may be needed to complete all the anode and cathode patterns.

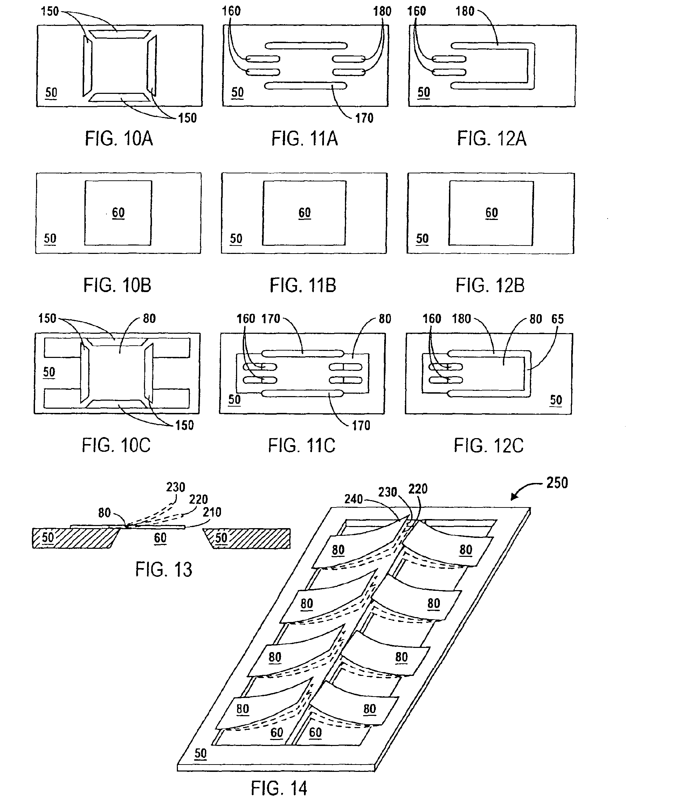

A mechanical stress-relief feature may be provided by forming one or more openings contiguous with both of the portions **90** and **100** of MEMS structure **80**. The openings of the stress-relief feature may extend downward from the substrate top surface **55** and may extend through substrate **50** to its bottom surface. Such openings also provide a degree of thermal isolation by limiting heat-conducting paths. By way of illustration, some examples of such stress-relief features are shown in FIGS. 10A- 10C, 11A- 11C, and 12A- 12C, each of which has a number of elongated openings.

FIGS. 10A - 10C are top plan views illustrating various stages in fabrication of a sixth embodiment of a fuel cell made in accordance with the invention. Openings **150** are formed along edges of opening **60** so that they are contiguous with portions **90** and **100** of MEMS structure **80**. As shown, openings **150** are elongated in a direction parallel to the top surface of substrate **50** and generally parallel to edges of opening **60**.

FIGS. 11A-11C are top plan views of various stages in fabrication of a seventh embodiment. Openings **160** are elongated in a direction parallel to the top surface of substrate **50** and generally perpendicular to edges of opening **60**, while openings **170** are elongated in a direction generally parallel to edges of opening **60**.

FIGS. 12A - 12C are top plan views illustrating various stages in fabrication of an eighth embodiment. In this embodiment, openings **160** are similar to those of FIGS. 11A - 11C. In the embodiment shown in FIGS. 12A - 12C, openings **160** for mechanical stress relief are formed adjacent to the one edge by which MEMS structure **80** is supported. Another opening **180** extends around three sides of MEMS structure **80**, generally parallel to three edges of opening **60** and effectively merged with that portion **65** of opening **60** that extends completely through substrate **50**.

FIG. 13 is a side elevation view schematically illustrating various positional configurations **220** and **230** that may be taken by a fuel cell structure in response to temperature changes during operation of the fuel cell, due, for example, to differences in thermal expansion coefficient among the cathode, anode, electrolyte, and interconnects. Thus, a portion of MEMS structure **80** has an edge **210**, free to move in response to heat to reduce mechanical stress that would otherwise occur if MEMS structure **80** were completely fixed.

FIG. 14 is a perspective view schematically illustrating various positional configurations **220**, **230**, and **240** taken in response to temperature changes by MEMS fuel-cell structures **80** in an array **250** of fuel cells made in accordance with the invention.

Thus, one aspect of the invention is provision of an electrical energy source comprising a combination of a MEMS structure including means for producing electrical current in an electrolyte with means for supporting the MEMS structure and means for cantilevering the MEMS structure from its means of support. Means for conducting heat away from the energy source may be provided. A portion of the MEMS structure having thermal contact with a substrate may be provided for conducting away heat generated in the MEMS structure. A portion of the MEMS structure may have one or more openings provided for relief of mechanical stress and/or for limiting heat-conducting paths.

Another aspect of the invention is a fabrication method specially adapted for fabricating such an energy source. This specially adapted method encompasses embodiments employing steps of providing a substrate, forming a MEMS fuel-cell structure on the substrate by performing the substeps of depositing an electrolyte, depositing and patterning an anode, optionally depositing additional electrolyte, depositing and patterning a cathode, and removing a portion of the substrate under the fuel-cell structure. An opening through the substrate may be formed adjacent to the MEMS fuel-cell structure while leaving the MEMS fuel-cell structure supported by only one edge, whereby the MEMS fuel-cell structure is cantilevered. Additional openings may be formed for stress relief and/or for limiting heat-conducting paths.

### INDUSTRIAL APPLICABILITY

The present invention is useful in the manufacture of fuel cells. Fuel cells made by methods of the invention and electronic devices incorporating such fuel cells are applicable in many electronic applications, especially those requiring portable devices.

Although the foregoing has been a description and illustration of specific embodiments of the invention, various modifications and changes thereto can be made by persons skilled in the art without departing from the scope and spirit of the invention as defined by the following claims. For one example, a current collector may be included in a fuel cell made in accordance with the invention, such a current collector may be porous, and such a current collector may be used (by being deposited and optionally patterned first) to support the other elements of the fuel-cell structure, analogously to the embodiments in which an anode, electrolyte, or cathode supports the other elements. For another example, various fuel-cell structures in an array of fuel cells may have differing configurations adapted to facilitate their electrical interconnection and/or their fuel supplies and/or their response to heat generated. It is intended that the described and illustrated embodiments be considered exemplary only and that the true scope and spirit of the invention be defined by the following claims.

## Claims

1. A fuel cell comprising in combination:
a substrate having a substrate top surface, a substrate bottom surface, and an opening, said opening extending upward from said substrate bottom surface; and
a MEMS structure at least partially aligned with said opening, said MEMS structure including a first portion disposed on said substrate top surface and a second portion extending over only part of said opening, said MEMS structure comprising an anode, a cathode, and an electrolyte in contact with said anode and cathode.

2. The fuel cell of claim 1, wherein said second portion of said MEMS structure forms a cantilever supported by said first portion of said MEMS structure.

3. The fuel cell of claim 1, further comprising a mechanical stress-relief feature, said stress-relief feature comprising at least a second opening contiguous with both of said first and second portions of said MEMS structure.

4. An electronic device comprising the fuel cell of claim 1.

5. A fuel cell assembly comprising a plurality of the fuel-cells of claim 1, arranged in an array.

6. An electrical energy source comprising in combination:
a MEMS structure, said MEMS structure comprising means for producing electrical current in an electrolyte for delivering said electrical energy;
means for supporting said MEMS structure; and
means for cantilevering said MEMS structure from said means for supporting said MEMS structure.

7. The electrical energy source of claim 6, wherein said electrical-current-producing means includes an anode, a cathode, and said electrolyte disposed in contact with said anode and cathode.

8. An electronic device comprising the electrical energy source of claim 6.

9. A method for fabricating a MEMS fuel cell, said method comprising the steps of:
a) providing a substrate;
b) forming a fuel-cell structure on said substrate by depositing in suitable order and optionally patterning an anode, an electrolyte, and a cathode;
c) removing a portion of said substrate under said fuel-cell structure to leave said fuel-cell structure supported in membrane form; and
d) forming at least a first opening adjacent to said fuel-cell structure while leaving said fuel-cell structure supported by only one edge, whereby said fuel-cell structure is cantilevered.

10. A fuel cell made by the method of claim 9.
